# EUROPÄISCHE PATENTANMELDUNG

(11) **EP 1 847 474 A1**
(43) Veröffentlichungstag der Anmeldung: **24.10.2007**
(21) Anmeldenummer: 07106639.3
(22) Anmeldetag: 20.04.2007
(51) Int. Cl.: B65D 81/28

(54) **Verpackung und Verwendung von Duftstoffen in einer Verpackung**

(30) Priorität: 21.04.2006 DE 102006018544
(71) Anmelder: Mayr-Melnhof Karton AG, 1040 Wien (AT)
(72) Erfinder: Bourne, Tim, Flintshire, CH5 2NR (GB)
(74) Vertreter: Hofstetter, Alfons J.

(57) **Zusammenfassung**

Die vorliegende Erfindung betrifft eine Verpackung, insbesondere Verpackung für Lebensmittel, wobei die Verpackung zumindest teilweise aus einem einen Duftstoff oder eine einen Duftstoff enthaltende Flüssigkeit aufnehmenden Material besteht, wobei der Duftstoff zur Abwehr und dem Abhalten von Schädlingen dient. Die Erfindung betrifft weiterhin die Verwendung von mindestens einem Duftstoff in einer Verpackung zur Abwehr und dem Abhalten von Schädlingen.

## Beschreibung

Die vorliegende Erfindung betrifft eine Verpackung, insbesondere eine Verpackung für Lebensmittel. Die Erfindung betrifft weiterhin die Verwendung von mindestens einem Duftstoff in einer Verpackung.

So genannte Vorratsschädlinge sind bei der Verpackung von Lebensmitteln ein immer häufiger auftretendes Problem. Dabei werden die Nahrungsmittel oder Genussmittel entweder bei der Verpackung des Lebensmittels, beim Transport oder bei der Lagerung befallen. Bei der Lagerung und Aufbewahrung von Lebensmitteln über einen längeren Zeitraum kann es dabei zu einer Massenvermehrung der Schädlinge kommen. Dabei entstehen nicht nur Fressschäden, sondern auch Verunreinigungen durch Kot, Gespinste und Sekrete der Vorratsschädlinge. Dies führt dazu, dass die Lebensmittel bei starkem Befall aus hygienischen Gründen nicht mehr zum Verzehr geeignet sind. Bei derartigen Schädlingen handelt es sich insbesondere um so genannte vorratsschädigende Motten, wie z. B. die Mehlmotte, die Speicher- oder Kakaomotte, die Dörrobstmotte, die Getreidemotte oder die Kornmotte. Zudem sind eine Vielzahl von vorratsschädigenden Käferarten, wie z. B. Schwarz-, Rüssel- oder Nagekäfer, bekannt.

Um Lebensmittelverpackungen vor derartigen Schädlingen zu schützen, wurden bisher verschiedene Möglichkeiten vorgeschlagen. Zum einen wurden innerhalb der Verpackungen labyrinthartige Wegsamkeiten angeordnet, die es den Schädlingen nicht möglich machen, an das verpackte Lebensmittel zu gelangen. Derartige Verpackungen sind allerdings sehr aufwendig und damit teuer herzustellen. Des Weiteren wurde versucht, eine oder mehrere Verpackungshüllen um die eigentliche Lebensmittelverpackung auszubilden, um zu verhindern, dass der Schädling in das Verpackungsinnere und damit an das Lebensmittel gelangt. Auch diese Lösung ist relativ aufwendig und teuer in der Herstellung.

Es ist daher Aufgabe der vorliegenden Erfindung, eine gattungsgemäße Verpackung bereitzustellen, die Schädlinge, insbesondere so genannte Vorratsschädlinge, zuverlässig von dem Verpackungsinhalt, insbesondere dem Lebensmittel, fernhält.

Gelöst wird diese Aufgabe durch eine Verpackung gemäß den Merkmalen des Anspruchs 1 sowie einer erfindungsgemäßen Verwendung gemäß den Merkmalen des Anspruchs 10.

Vorteilhafte Ausgestaltungen der Erfindung sind in den jeweiligen Unteransprüchen beschrieben.

Eine erfindungsgemäße Verpackung, insbesondere eine Verpackung für Lebensmittel, besteht zumindest teilweise aus einem einen Duftstoff oder eine einem Duftstoff enthaltende Flüssigkeit aufnehmenden Material, wobei der Duftstoff zur Abwehr und dem Abhalten von Schädlingen, insbesondere von so genannten Vorratsschädlingen, dient. Das den Duftstoff oder die Duftstoff enthaltende Flüssigkeit aufnehmende Material kann dabei Papier, Karton oder Kunststoff sein. Andere Materialien, wie zum Beispiel Holz, sind jedoch auch denkbar. Durch die Bereitstellung einer derartigen Verpackung ist gewährleistet, dass einerseits die Schädlinge zuverlässig vom Verpackungsinhalt abgehalten werden. Des Weiteren kann bei der Herstellung der erfindungsgemäßen Verpackung auf kostenintensive Lösungen, wie sie im Stand der Technik vorgeschlagen werden, verzichtet werden. Durch die Bereitstellung des die Schädlinge abwehrenden Duftstoffs enthaltenen Materials zur Verpackungsherstellung können einfache und insbesondere alle bereits verwendeten Verpackungszuschnitte weiterhin verwendet werden.

In einer vorteilhaften Ausgestaltung der erfindungsgemäßen Verpackung besteht die Verpackung zumindest teilweise aus einem Kunststoff, nämlich einem Cellulosepolymer. Bei derartigen Cellulosepolymeren handelt es sich zum Beispiel um das Produkt Tenite^{®} der Firma Eastman. Derartige Cellulosepolymere weisen den Vorteil auf, dass sie einerseits aus nachwachsenden Rohstoffen produziert werden und recycelbar sind. Zudem sind derartige Cellulosepolymere in der Lage, Duftstoffe oder Duftstoff enthaltende Flüssigkeiten sehr gut aufzunehmen und zu speichern. Zudem sind die Duftstoffkonzentration und die Duftstoffabgabe an die Umgebung steuer- bzw. einstellbar.

In einer weiteren vorteilhaften Ausgestaltung der Erfindung ist der Duftstoff Citronella bzw. die Duftstoff enthaltende Flüssigkeit Citronella-Öl. Es hat sich herausgestellt, dass Citronella gut geeignet ist, vorratsschädigende Motten, insbesondere die Dörrobstmotte, von damit beträufelten Gegenständen abzuhalten.

In einer weiteren vorteilhaften Ausgestaltung der Erfindung ist das Material zur Herstellung der Verpackung filmartig ausgebildet. Damit ist es vorteilhafterweise möglich, dass eine Verpackung, die überwiegend aus Karton besteht, mit dem den Duftstoff oder der Duftstoff enthaltenen Flüssigkeit aufnehmenden filmartigen Material ausgekleidet wird. Zudem besteht die Möglichkeit, dass bei einer Verpackung, die überwiegend aus Karton besteht, mindestens eine mit dem den Duftstoff oder der Duftstoff enthaltenen Flüssigkeit aufnehmenden Material überzogene, fensterartige Öffnung ausgebildet ist. Letzteres dient insbesondere der Präsentation der verpackten Ware, insbesondere des Lebensmittels.

Die Erfindung betrifft weiterhin die Verwendung von mindestens einem Duftstoff in einer Verpackung, insbesondere einer Lebensmittelverpackung, zur Abwehr und dem Abhalten von Schädlingen. Erfindungsgemäß wird dabei eine Verpackung wie im Vorhergehenden beschrieben verwendet. Die Verwendung derartiger Materialien zur Herstellung von Lebensmittelverpackungen bzw. zur Verwendung in Lebensmittelverpackungen ist bisher nicht bekannt. Durch die erfindungsgemäße Verwendung ist es einerseits möglich, Vorratsschädlinge zuverlässig von den verpackten Waren, insbesondere Lebensmitteln, abzuhalten und andererseits eine kostengünstige und einfache Herstellung der Verpackung selbst zu gewährleisten.

## Patentansprüche

1. Verpackung, insbesondere Verpackung für Lebensmittel,
**dadurch gekennzeichnet,**
**dass** die Verpackung zumindest teilweise aus einem einen Duftstoff oder eine einen Duftstoff enthaltende Flüssigkeit aufnehmenden Material besteht, wobei der Duftstoff zur Abwehr und dem Abhalten von Schädlingen dient.

2. Verpackung nach Anspruch 1,
**dadurch gekennzeichnet,**
**dass** das den Duftstoff oder die Duftstoff enthaltende Flüssigkeit aufnehmende Material Papier, Karton oder Kunststoff ist.

3. Verpackung nach Anspruch 2,
**dadurch gekennzeichnet,**
**dass** der Kunststoff ein Cellulosepolymer ist.

4. Verpackung nach Anspruch 3,
**dadurch gekennzeichnet,**
**dass** das Cellulosepolymer Tenite^{®} ist.

5. Verpackung nach einem der vorhergehenden Ansprüche,
**dadurch gekennzeichnet,**
**dass** der Duftstoff Citronella beziehungsweise die Duftstoff enthaltende Flüssigkeit Citronella-Öl ist.

6. Verpackung nach einem der vorhergehenden Ansprüche,
**dadurch gekennzeichnet,**
**dass** das Material filmartig ausgebildet ist.

7. Verpackung nach einem der vorhergehenden Ansprüche,
**dadurch gekennzeichnet,**
**dass** das die Duftstoffkonzentration im Material und die Duftstoffabgabe an die Umgebung steuer- und einstellbar ist.

8. Verpackung nach einem der vorhergehenden Ansprüche,
**dadurch gekennzeichnet,**
**dass** die Verpackung überwiegend aus Karton besteht und mit dem den Duftstoff oder der Duftstoff enthaltenden Flüssigkeit aufnehmenden Material ausgekleidet ist.

9. Verpackung nach Anspruch 6,
**dadurch gekennzeichnet,**
**dass** die Verpackung überwiegend aus Karton besteht und mindestens eine mit dem den Duftstoff oder der Duftstoff enthaltenden Flüssigkeit aufnehmenden Material überzogene, fensterartige Öffnung aufweist.

10. Verwendung von mindestens einem Duftstoff in einer Verpackung, insbesondere einer Lebensmittelverpackung, zur Abwehr und dem Abhalten von Schädlingen.

11. Verwendung nach Anspruch 10,
**dadurch gekennzeichnet,**
**dass** die Verpackung zumindest teilweise aus einem einen Duftstoff oder eine einen Duftstoff enthaltende Flüssigkeit aufnehmenden Material besteht, wobei der Duftstoff zur Abwehr und dem Abhalten von Schädlingen dient.

12. Verwendung nach Anspruch 11,
**dadurch gekennzeichnet,**
**dass** das den Duftstoff oder die Duftstoff enthaltende Flüssigkeit aufnehmende Material Papier, Karton oder Kunststoff ist.

13. Verwendung nach Anspruch 12,
**dadurch gekennzeichnet,**
**dass** der Kunststoff ein Cellulosepolymer ist.

14. Verwendung nach Anspruch 13,
**dadurch gekennzeichnet,**
**dass** das Cellulosepolymer Tenite^{®} ist.

15. Verwendung nach einem der Ansprüche 10 bis 14,
**dadurch gekennzeichnet,**
**dass** der Duftstoff Citronella beziehungsweise die Duftstoff enthaltende Flüssigkeit Citronella-Öl ist.

16. Verwendung nach einem der Ansprüche 10 bis 15,
**dadurch gekennzeichnet,**
**dass** das Material filmartig ausgebildet ist.

17. Verwendung nach einem der Ansprüche 10 bis 16,
**dadurch gekennzeichnet,**
**dass** das die Duftstoffkonzentration im Material und die Duftstoffabgabe an die Umgebung steuer- und einstellbar ist.

18. Verwendung nach einem der Ansprüche 10 bis 17,
**dadurch gekennzeichnet,**
**dass** die Verpackung überwiegend aus Karton besteht und mit dem den Duftstoff oder der Duftstoff enthaltenden Flüssigkeit aufnehmenden Material ausgekleidet ist.

19. Verwendung nach Anspruch 16,
**dadurch gekennzeichnet,**
**dass** die Verpackung überwiegend aus Karton besteht und mindestens eine mit dem den Duftstoff oder der Duftstoff enthaltenden Flüssigkeit aufnehmenden Material überzogene, fensterartige Öffnung aufweist.
